# EUROPEAN PATENT APPLICATION

(11) **EP 2 552 002 A1**
(43) Date of publication of application: **30.01.2013**
(21) Application number: 11175143.4
(22) Date of filing: 25.07.2011
(51) Int. Cl.: H02M 5/06, H02M 5/08, H02M 7/04

(54) **Transformerless AC to DC power circuit with a voltage divider at its input**

(71) Applicant: Ann Cheng Enterprise Co., Ltd., Taibao City, Chiayi County Taibao City (CN)
(72) Inventor: Tsai, Tsung-Ein, Taipei City (TW)
(74) Representative: Jeannet, Olivier

(57) **Abstract**

A power adjustable and transformerless AC to DC power circuit (1) including an AC to DC power circuit (1) is revealed. The AC to DC power circuit (1) consists of a first reactance component (11), a second reactance component (12) and an AC power connected to form a loop. The second reactance component (12) is connected to a full bridge rectifier (13) for full-wave rectification of lower voltage AC to output an unstable low voltage DC. A filter capacitor (14) is connected across to the full bridge rectifier (13) to filter the unstable low voltage DC and output a stable low voltage direct current. Thus the manufacturing cost is dramatically reduced, the power is saved, and no heat is generated. Moreover, the reactance of the whole circuit is reduced so as to get high power factor. No high frequency radiation is created so that there is no radiation damage and no interference to electronic equipment.

## Description

### BACKGROUND OF THE INVENTION

### 1. Field of the Invention

The present invention relates to a power adjustable and transformerless AC to DC power circuit, especially to a power adjustable and transformerless AC to DC power circuit that is produced with lower cost, lower reactance and high power factor. At the same time, no high frequency radiation is generated so that there is no radiation damage to users and no interference to electronic equipment.

### 2. Description of Related Art

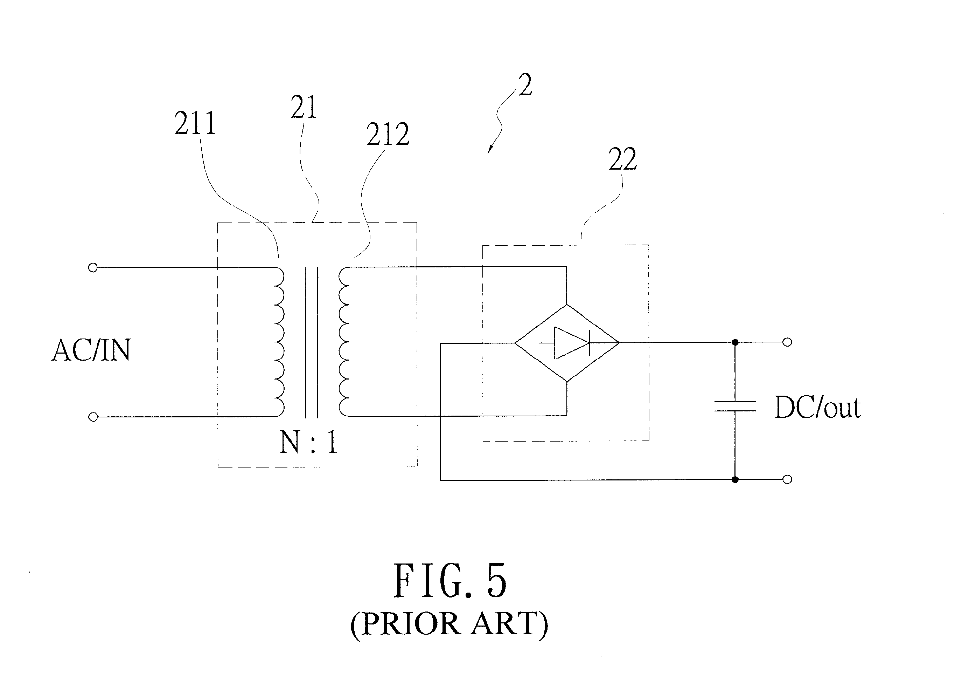

Refer to Fig. 5, a circuit diagram available now is revealed. Now portable electronics such as mobile phones, notebooks etc. all include a buck power supply circuit 2. The buck power supply circuit 2 includes a transformer 21 and a full bridge rectifier 22.

The transformer 21 consists of a primary coil 211 and a secondary coil 212. The number of turns of the secondary coil 212 is smaller than the number of turns of the primary coil 211. The primary coil 211 is connected to an alternating current power so that the secondary coil 212 of the transformer 21 outputs a low voltage alternating current.

An input end of the full bridge rectifier 22 is connected to the secondary coil 212 while an output end is connected to a filter capacitor 221 so as to rectify the low voltage alternating current to a low voltage direct current and output the low voltage direct current.

In the transformer 21, the ratio of turns of the primary coil 211 to turns of the secondary coil 212 is N: 1 so as to covert the 220V or 110V alternating current into low voltage alternating current. Then the full bridge rectifier 22 and the filter capacitor 221 further converts the low voltage alternating current into low voltage direct current and output the low voltage direct current for charging supply or power supply for electronic devices.

However, the design of electronics is getting compact and lightweight. The use of the transformer has negative effect on the compact size of the electronic device. Thus the low frequency power is converted to high frequency alternating current by high frequency switching. Thus the high voltage current is reduced by a high frequency transformer with small volume and then is rectified into low voltage direct current. Yet the high-frequency radiation is generated due to the use of high frequency. The high-frequency radiation has harmful effects on users or causes interference to sensitive electronic equipment.

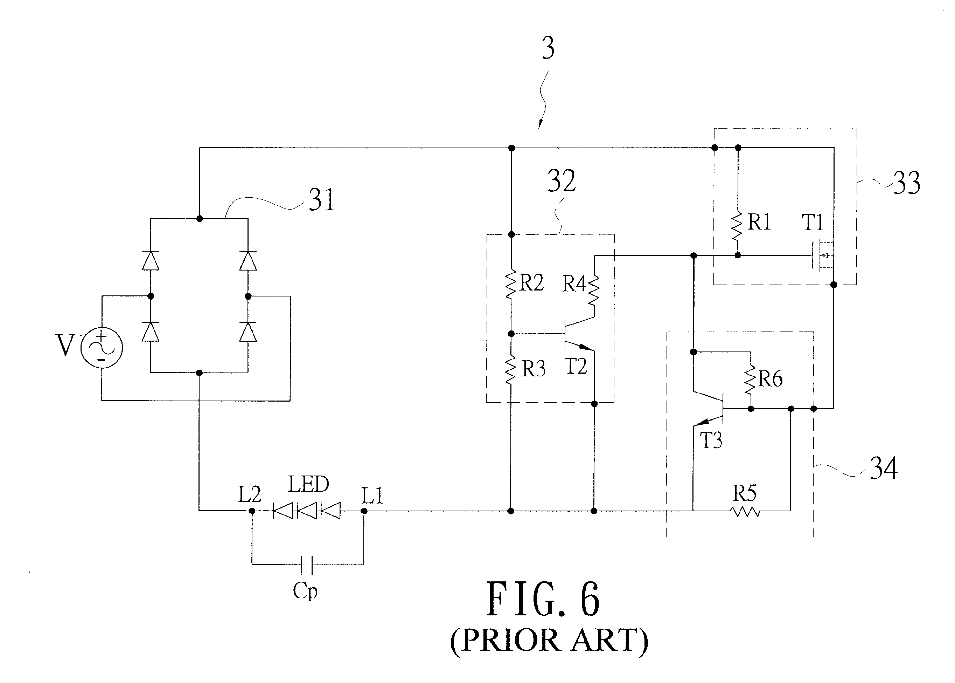

Thus a design of transformerless AC to DC converter circuit is provided. Refer to Fig. 6, another circuit diagram available now is revealed. The AC/DC converter circuit 3 includes a full bridge rectifier 31, an on-time control circuit 32, a current switching circuit 33, and a current limiting circuit 34.

The input end of the full bridge rectifier 31 is connected to an AC power (AC/IN) so that alternating current is rectified into direct current to be output. The on-time control circuit 32 is connected to the output end of the full bridge rectifier 31 and is including a voltage-divider (R2/R3) and a first transistor (T2). A base of the first transistor (T2) is connected to the output end of the full bridge rectifier 31 through the voltage-divider (R2/R3).

The current switching circuit 33 includes a second transistor T1 whose gate is connected to a collector of the first transistor (T2) of the on-time control circuit 32.

The load current limiting circuit 34 is connected between the connection node and a grounding point. The connection node is between the on-time control circuit 32 and the current switching circuit 33.

The current switching circuit 33 receives output signals of the on-time control circuit 32 and the current limiting circuit 34 so as to control conduction of the load current and the load current range. According to input/output potential difference, the on-time control circuit 32 determines on/off of the current switching circuit 33. That means once the potential difference is lower than a preset value, the load current is turned on. On the other hand, when the potential difference is over than the preset value, the load current is turned off. As to the load current limiting circuit 34, it limits the load current through the current switching circuit 33. When the load current is over a preset limit, signals are output to make the current switching circuit 33 limit the load current. Thus the current switching circuit 33 provides a regulated low-voltage DC power.

Although the above circuit can provide stable low voltage direct current without transformers, the use of transistors and resistors causes poor power conversion efficiency. Thus there is a room for improvement. If the power factor of the circuit also needs to be improved, a power factor circuit is required.

### SUMMARY OF THE INVENTION

Therefore it is a primary object of the present invention to provide a power adjustable and transformerless AC to DC power circuit including an AC to DC power circuit. The AC to DC power circuit consists of a first reactance component and a second reactance component connected with each other, together with an AC power to form a loop. The second reactance component is connected to an input end of a full bridge rectifier so that lower voltage AC from the second reactance component is rectified in a full-wave manner and converted into an unstable low voltage DC. A filter capacitor is connected across to an output end of the full bridge rectifier to filter the unstable low voltage DC and output a stable low voltage direct current. Thereby the AC is effectively converted into low voltage DC to be outputted without using transformers. Thus the manufacturing cost is reduced significantly. Without transformers, the energy is saved due to no loss and no heat is generated. Moreover, the reactance of the whole circuit is reduced so as to obtain high power factor. Furthermore, no high frequency radiation is produced; neither is radiation damage and interference to sensitive electronic equipment. The present invention has higher practical value.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a circuit diagram of an embodiment according to the present invention;
Fig. 2 is a circuit diagram of another embodiment according to the present invention;
Fig. 3 is a circuit diagram of a capacitive reactance component according to the present invention;
Fig. 4 is a circuit diagram of a further embodiment according to the present invention;
Fig. 5 is a circuit diagram of a prior art available now;
Fig. 6 is a circuit diagram of another prior art available now.

### DETAILED DESCRIPTION OF THE PREFERRED EMBODIMENT

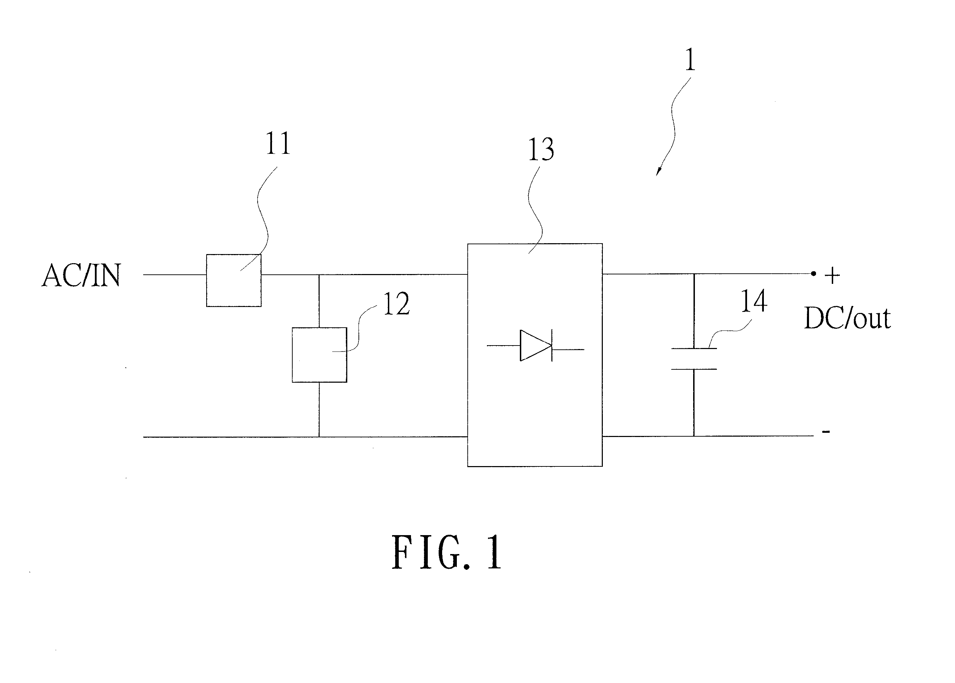

Refer to Fig. 1, an AC to DC power circuit 1 of the present invention includes a first reactance component 11, a second reactance component 12, a full bridge rectifier 13 and a filter capacitor 14 connected with each other.

The first reactance component 11, the second reactance component 12 and an AC power (AC/IN) form a loop. The full bridge rectifier 13 whose input end thereof is connected to the second reactance component 12 is used for full-wave rectification of lower voltage alternating current from the second reactance component 12, converting the alternating current into unstable low voltage direct current. The filter capacitor 14 can be an AC capacitor or an electrolytic capacitor, connected across to an output end of the full bridge rectifier 13 so as to filter the unstable low voltage direct current and output a stable low voltage direct current. By adjustment of an impedance ratio of the first reactance component 11 to the second reactance component 12, the alternating current power is effectively converted to a low voltage direct current power.

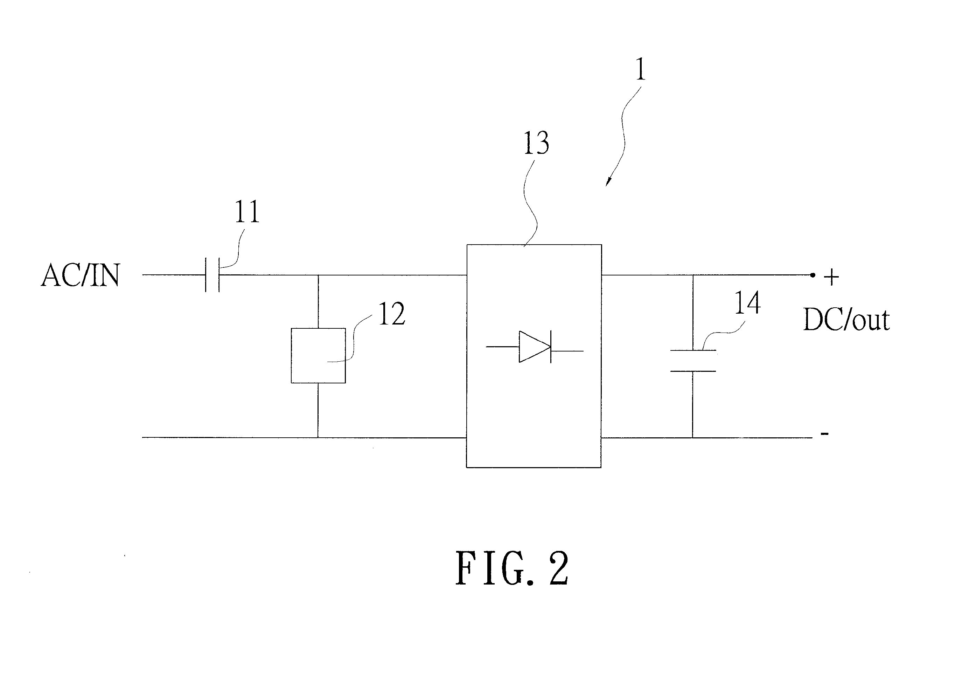

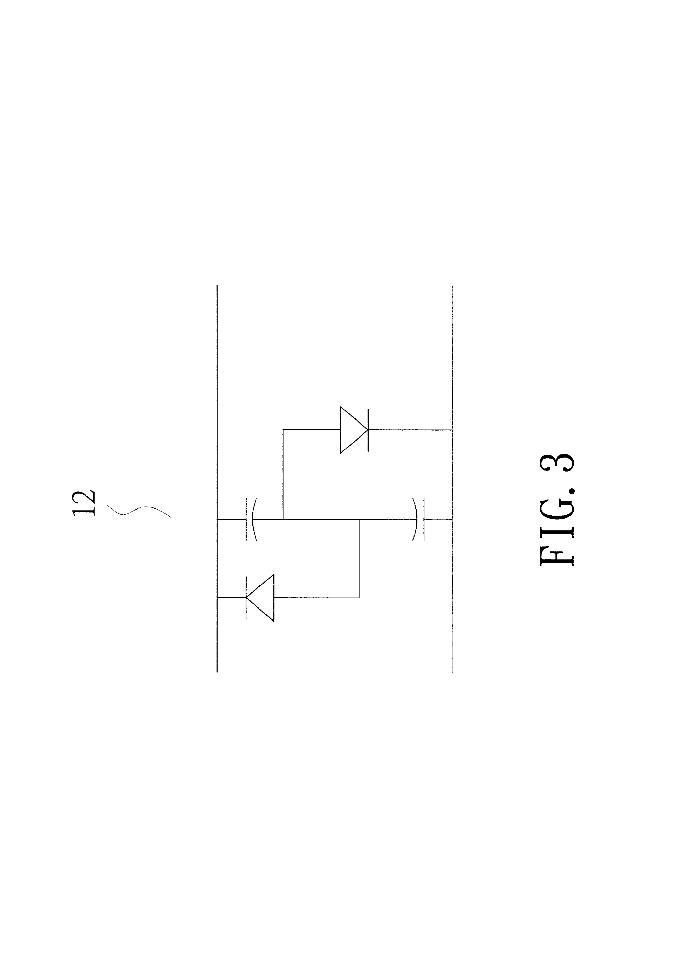

Refer to Fig. 2, a circuit diagram of another embodiment of the present invention is disclosed. A first reactance component 11 is an AC capacitor or its effective impedance is capacitive. One end of the first reactance component 11 is connected to an AC power (AC/IN) while the other end thereof is connected to a second reactance component 12 that is an AC capacitor or whose effective impedance is capacitive. Refer to Fig. 3, a circuit diagram of a capacitive reactance component is revealed. The second reactance component 12 or the first reactance component 11, whose effective impedance is a capacitive, includes two electrolytic capacitors connected in series by anodes or by cathodes and the anode and the cathode of each electrolytic capacitor are respectively connected to an anode and a cathode of a diode in parallel. Moreover, the first reactance component 11 and the second reactance component 12, whose effective impedance is capacitive, can be only an AC capacitor or formed by a plurality of AC capacitors connected in series or in parallel.

Thus the AC voltage applied to the second reactance component 12 can be adjusted by impedance ratio of the first reactance component 11 and the second reactance component 12. Take an 110V AC power as an example. When the first reactance component 11 is 22uF, and the second reactance component 12 whose effective impedance is capacitive includes a 1000uF electrolytic capacitor, the impedance ratio of the first reactance component 11 and the second reactance component 12 is 45.5:1. The peak alternating current of the second reactance component 12 is +3.4V due to connection of the 110V AC power. After passing through the full bridge rectifier 13 for rectification and the filter capacitor 14, the output voltage is 6.8V (3.4V+3.4V=6.8V). This is consistent with the value of the detected direct current voltage 7.0V. Thus the present invention can convert the AC power to low voltage direct current power.

If the first reactance component 11 is an AC capacitor, it is connected to a discharge resistor in parallel. When the AC power is off, voltage in the first reactance component 11 is discharged quickly by the discharge resistor so as to prevent electric shock.

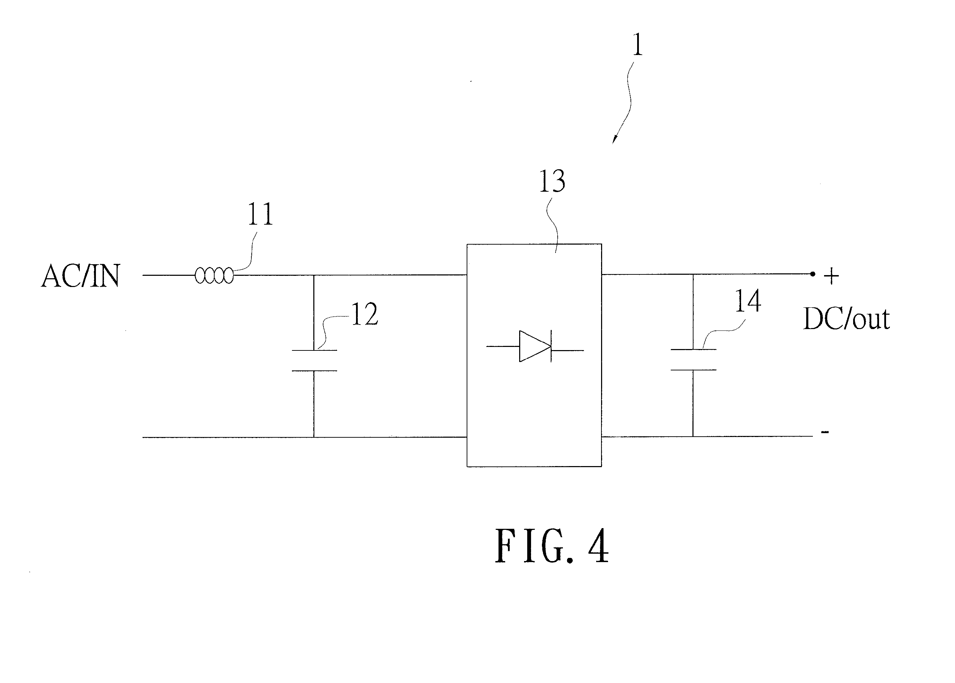

Refer to Fig. 4, a further embodiment of the present invention is revealed. As to the effective impedance of the first reactance component 11 and the effective impedance of the second reactance component 12, one is inductive while the other is capacitive. The first reactance component 11 or the second reactance component 12 whose effective impedance is inductive can be an AC inductor, a plurality of AC inductors connected in series or a plurality of AC inductors connected in parallel. The impedance of the inductor and the impedance of the capacitor cancel each other out. Thus reactance of the whole circuit, together with load, is reduced to the minimum value so as to get the maximum power factor. For example, take the AC to DC power circuit applied to a 220V AC power for driving LED lights as an example. When the first reactance component 11 is 1.3mH, the second reactance component 12 is 0.22nF, and the filter capacitor 14 is 0.068uF, 90 one-third Watt LED lights connected in series are activated, the output DC voltage is 243V and the output DC is 0.1A. Although 30W, 220V AC is required, only 0.16A is used and the power factor is over 0.9. Thus the present invention not only converts AC power to DC power but also meets the requirement of high power factor.

In addition, the effective impedance of the first reactance component 11 and the second reactance component 12 can also be resistance. The first reactance component 11 and the second reactance component 12 whose effective impedance is resistance can be a single resistor, a plurality of resistors connected in series, or a plurality of resistors connected in parallel. Such design can also convert AC power to DC power and satisfy the requirement of high power factor.

Additional advantages and modifications will readily occur to those skilled in the art. Therefore, the invention in its broader aspects is not limited to the specific details, and representative devices shown and described herein. Accordingly, various modifications may be made without departing from the spirit or scope of the general inventive concept as defined by the appended claims and their equivalent.

## Claims

1. A power adjustable and transformerless AC (alternating current) to DC (direct current) power circuit comprising an AC to DC power circuit (1) having a first reactance component (11), a second reactance component (12), a full bridge rectifier (13) and a filter capacitor (14) connected one another; wherein
the first reactance component (11), the second reactance component (12) and an AC power (AC/IN) form a loop;
the full bridge rectifier (13) whose input end thereof is connected to the second reactance component (12) is for full-wave rectification of lower voltage alternating current from the second reactance component (12), converting the lower voltage alternating current into unstable low voltage direct current;
the filter capacitor (14) is connected across to an output end of the full bridge rectifier (13) so as to filter the unstable low voltage direct current and output stable low voltage direct current.

2. The device as claimed in claim 1, wherein the filter capacitor (14) is an AC capacitor or an electrolytic capacitor.

3. The device as claimed in claim 1, wherein effective impedance of the first reactance component (11) is capacitive, inductive, or resistance.

4. The device as claimed in claim 3, wherein the first reactance component (11) whose effective impedance is capacitive is a single AC capacitor, a plurality of AC capacitors connected in series, a plurality of AC capacitors connected in parallel, two electrolytic capacitors connected in series by anodes thereof while an anode and a cathode of each electrolytic capacitor are respectively connected to an anode and a cathode of a diode in parallel, or two electrolytic capacitors connected in series by cathodes thereof while an anode and a cathode of each electrolytic capacitor are respectively connected to an anode and a cathode of a diode in parallel.

5. The device as claimed in claim 3, wherein the first reactance component (11) whose effective impedance is inductive is a single AC inductor, a plurality of AC inductors connected in series or a plurality of AC inductors connected in parallel.

6. The device as claimed in claim 3, wherein the first reactance component (11) whose effective impedance is resistance is a single resistor, a plurality of resistors connected in series, or a plurality of resistors connected in parallel.

7. The device as claimed in claim 1, wherein effective impedance of the second reactance component (12) is capacitive, inductive, or resistance.

8. The device as claimed in claim 7, wherein the second reactance component (12) whose effective impedance is capacitive is a single AC capacitor, a plurality of AC capacitors connected in series, a plurality of AC capacitors connected in parallel, two electrolytic capacitors connected in series by anodes thereof while an anode and a cathode of each electrolytic capacitor are respectively connected to an anode and a cathode of a diode in parallel, or two electrolytic capacitors connected in series by cathodes thereof while an anode and a cathode of each electrolytic capacitor are respectively connected to an anode and a cathode of a diode in parallel.

9. The device as claimed in claim 7, wherein the second reactance component (12) whose effective impedance is inductive is a single AC inductor, a plurality of AC inductors connected in series or a plurality of AC inductors connected in parallel.

10. The device as claimed in claim 7, wherein the second reactance
component (12) whose effective impedance is resistance is a single resistor, a plurality of resistors connected in series, or a plurality of resistors connected in parallel.
